# EUROPEAN PATENT SPECIFICATION

(11) **EP 2 656 920 B1**
(45) Date of publication and mention of the grant of the patent: **04.03.2020**
(21) Application number: 11852023.8
(22) Date of filing: 14.12.2011
(51) Int. Cl.: B03C 1/28, B03C 1/14, B03C 1/00, B23Q 11/00

(54) **ROTATING-DRUM TYPE MAGNETIC SEPARATOR COMPRISING DEVICE FOR SUPPRESSING SLIT CLOGGING**
MAGNETISCHER TRENNER DES DREHTROMMELTYPS ENTHALTEND EINE VORRICHTUNG ZUR UNTERDRÜCKUNG VON SCHLITZVERSTOPFUNGEN
SEPARATEUR MAGNETIQUE DU TYPE A TAMBOUR ROTATIF COMPRENANT UN DISPOSITIF PERMETTANT DE SUPPRIMER L'OBSTRUCTION DE FENTE

(30) Priority: 24.12.2010 JP 2010286997
(43) Date of publication of application: 30.10.2013
(73) Proprietor: Sumitomo Heavy Industries Finetech, Ltd., Kurashiki-shi, Okayama 713-8501 (JP)
(72) Inventor: NISHIZAWA Shinya, Kurashiki-shi Okayama 713-8501 (JP)
(74) Representative: Carstens, Dirk Wilhelm
(86) International application number: PCT/JP2011/078847
(87) International publication number: WO 2012/086475

(56) References cited:
- WO-A1-2009/099188
- JP-A- 2007 000 978
- JP-A- 2010 064 164
- JP-U- H0 310 347

## Description

### Technical Field

The present invention relates to a rotating-drum type magnetic separator comprising a device for suppressing slit clogging which cleans a slit of the rotating-drum type magnetic separator which separates and recovers sludge included in used coolant liquid.

### Background Art

In cutting, grinding, or the like of a magnetic material which is represented by a metal material, particularly, a steel material, scrap, chips, or the like which is discharged along with coolant liquid are separated from the liquid and recovered. Since the scrap, chips, or the like have various shapes, various magnetic separation (recovery) devices have been developed from the viewpoint of recovery efficiency.

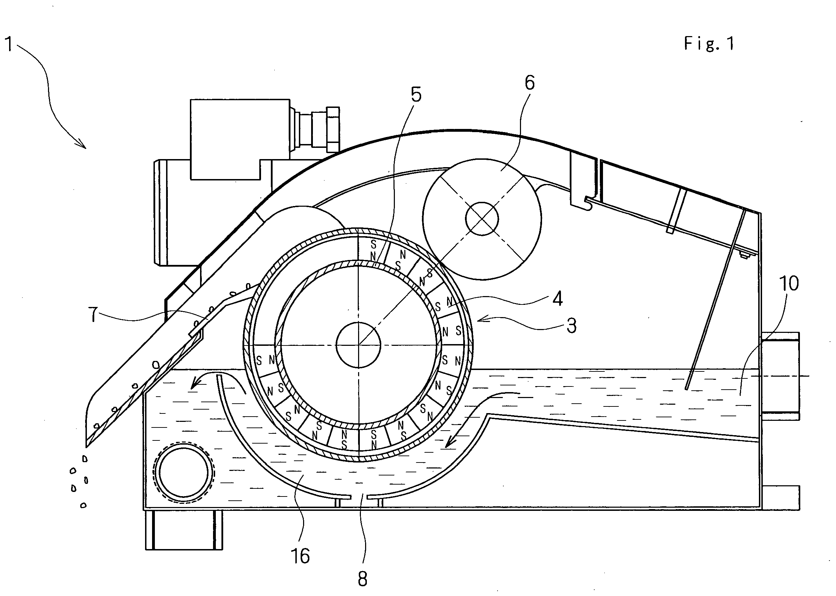

For example, JP 2007-000978 A discloses a rotating-drum type magnetic separator in the related art. Fig. 1 shows a configuration of the rotating-drum type magnetic separator in the related art and is a cross-sectional view at a surface perpendicular to a rotational axis of a rotating drum. As shown in Fig. 1, in the rotating-drum type magnetic separator 1 in the related art, a liquid reservoir portion 10 which stores coolant liquid in a box type main body is provided. In order to divide the liquid reservoir portion 10 into two, a rotating drum 3 is supported in an approximately horizontal direction in the vicinity of the center portion of the main body. The rotating drum 3 is a cylindrical body which is formed of a nonmagnetic material such as stainless steel, and an inner cylinder 5, in which a plurality of magnets 4, 4, ... are disposed on the outer circumferential surface in a predetermined arrangement, is coaxially fixed to the inner portion of an outer cylinder. Polarities of the plurality of magnets 4, 4, ... are disposed so as to generate a predetermined magnetic flux in the vicinity of the outer circumference surface of the rotating drum 3, so that scrap, chips, or the like which are magnetic bodies contained in the coolant liquid are magnetically attached.

In JP 2007-000978 A, the plurality of magnets 4, 4, ... are disposed between a portion in which the rotating drum 3 starts to be immersed in the liquid reservoir portion 10 and the top, that is, on the inner cylinder 5 corresponding to a portion equivalent to approximately 3/4 of the outer circumferential surface of the rotating drum 3. The magnet 4 is not disposed on the inner cylinder 5 in the portion corresponding to the remaining approximately 1/4, and a magnetic force is not applied on the portion.

Sludge, which is adsorbed on the outer circumference surface of the rotating drum 3 on the bottom portion of the liquid reservoir portion 10 by application of the magnetic force of the plurality of magnets 4, 4, ... is transported to the top of the rotating drum 3 according to the rotation of the rotating drum 3. When the transported sludge passes through the top, adsorption forces generated due to the magnetic forces of the plurality of magnets 4, 4, ... are lost, and the sludge is scratched away by a scraper 7 abutting on the rotating drum 3 and is recovered. A squeezing roller 6, in which an elastic body such as rubber is disposed on the surface, is provided in the vicinity of the top of the rotating drum 3, and the squeezing roller 6 is abutted on the outer circumference surface of the rotating drum 3 by a predetermined pressing force. The adsorbed sludge passes through between the rotating drum 3 and the squeezing roller 6, and thus, liquid contained in the sludge is squeezed, and only the scrap, chips, or the like is separated at the position in which the magnetic force does not reach.

In order to suppress the amount of accumulated ground particles which cannot be recovered, a slit-like opening 8 is provided on the bottom portion of a magnetic field channel 16 along the outer circumference surface of the rotating drum 3. The opening 8 is provided, and thus, it is possible to increase recovery rates of the scrap, chips, or the like while maintaining the recovery rate of the ground particles.

With regard to the available prior art, attention is also drawn to WO 2009/099188A1, J2010-064164 A, and JP 3010347 U.

### Summary of Invention

### Technical Problem

In JP 2007-000978 A, the ground particles are recovered from the slit-like opening 8. However, nonmagnetic particles or the like larger than an opening width are clogged in the opening 8, and there is a problem that the recovery rates of the ground particles may be largely decreased. Moreover, work to clean at fixed intervals is troublesome, and there is a concern that work efficiency in the entire process may be decreased.

The present invention is made in consideration of the above-described circumstances, and an object thereof is to provide a rotating-drum type magnetic separator comprising a device for suppressing slit clogging capable of maintaining recovery rates of ground particles without clogging of the ground particles in the opening.

### Solution to Problem

In order to achieve the object, according to a first aspect, there is provided a rotating-drum type magnetic separator comprising a device for suppressing slit clogging as set forth in claim 1. Preferred embodiments of the present invention may be gathered from the dependent claims.

### Advantageous Effects of Invention

According to the present invention, the slit cleaning member moves along the longitudinal direction of the slit-like opening, and thus, it is possible to suppress the opening from being clogged due to the ground particles.

### Brief Description of Drawings

Fig. 1 shows a configuration of a rotating-drum type magnetic separator in the related art and is a cross-sectional view at a surface perpendicular to a rotational axis of a rotating drum.
Fig. 2 shows a configuration of a rotating-drum type magnetic separator which uses a device for suppressing slit clogging according to Embodiment 1 of the present invention and is a cross-sectional view at a surface perpendicular to a rotational axis of a rotating drum.
Fig. 3 is a plan view showing a configuration of the device for suppressing slit clogging according to Embodiment 1 of the present invention.
Fig. 4 is a front view and a side view showing a configuration of a slit cleaning member of the device for suppressing slit clogging according to Embodiment 1 of the present invention.
Fig. 5 is a plan view showing a configuration of a device for suppressing slit clogging according to Embodiment 2 of the present invention.
Fig. 6 is a plan view showing a configuration of a device for suppressing slit clogging according to Embodiment 3 of the present invention.

### Description of Embodiments

Hereinafter, the present invention will be described in detail with reference to the drawings showing embodiments.

### (Embodiment 1)

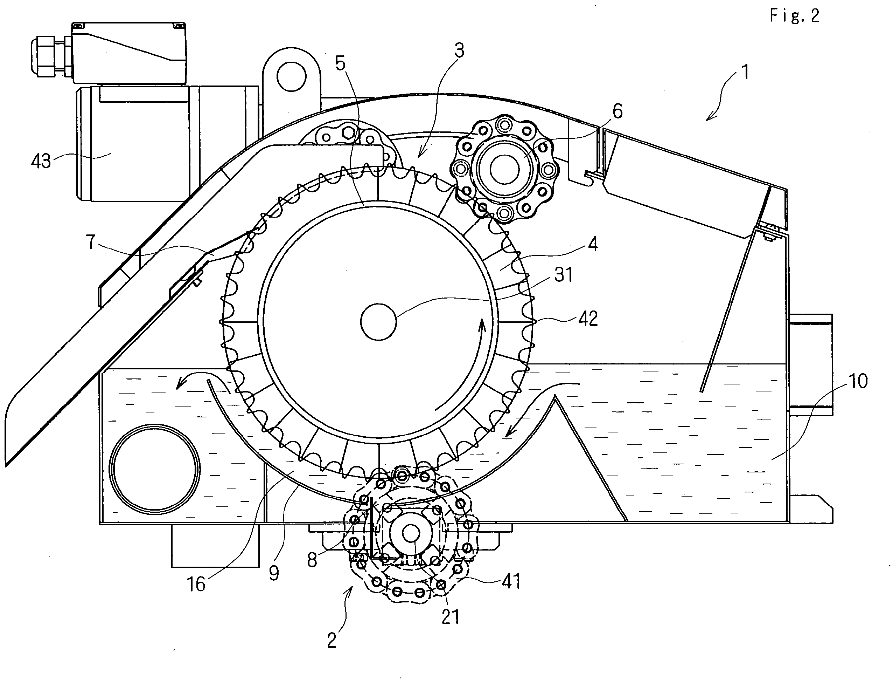

Fig. 2 shows a configuration of a rotating-drum type magnetic separator which uses a device for suppressing slit clogging according to Embodiment 1 of the present invention and is a cross-sectional view at a surface perpendicular to a rotational axis of a rotating drum. As shown in Fig.2, in a rotating-drum type magnetic separator 1 which uses the device for suppressing slit clogging according to Embodiment 1, a liquid reservoir portion 10 which stores coolant liquid in a box type main body is provided. In order to divide the liquid reservoir portion 10 into two, a rotating drum 3 is rotatably supported by a rotating shaft 31 in an approximately horizontal direction in the vicinity of the center portion of the main body.

The rotating drum 3 is a cylindrical body, which is formed of a nonmagnetic material such as stainless steel, and an inner cylinder 5, in which a plurality of magnets 4, 4, ... are disposed, is coaxially fixed by the rotating shaft 31 in the inner portion on the outer circumferential surface of the rotating drum 3. The plurality of magnets 4, 4, ... disposed on the inner cylinder 5 are disposed by appropriately adjusting magnetic poles so as to apply a necessary magnetic force to the outer circumferential surface of the rotating drum 3. In Embodiment 1, a neodymium-based magnet is used for the magnet 4, N and S become a pair, and the magnets are disposed in the order of N, S, N, S from one end of a squeezing roller 6 side.

A range where the magnetic force is applied to the rotating drum 3 is changed according to an outer diameter of the drum, a position of a scraper 7, or the like. In Fig. 2, the magnets 4, 4, ... are disposed on the inner cylinder 5 so that adsorption force reaches a range of an approximately 3/4 of the outer circumference surface, that is from a portion in which the rotating drum 3 starts to be immersed in the liquid reservoir portion 10 to the top, and the magnets are not disposed on the inner cylinder 5 in a range of the remaining approximately 1/4 of the outer circumferential surface. The sludge containing scrap, chips, or the like which are adsorbed to the outer circumferential surface of the rotating drum 3 in a magnetic field channel 16 to which the magnetic force is applied, is transported up to the top of the rotating drum 3 by the rotation of the rotating drum 3.

The squeezing roller 6 is disposed in the vicinity of the top of the rotating drum 3, and is abutted on the outer circumferential surface of the rotating drum 3 by a predetermined pressing force. The liquid, which is contained in the sludge which is adsorbed to the outer circumferential surface of the rotating drum 3 and transported, is squeezed by the squeezing roller 6. When the scrap, chips, or the like, in which liquid is squeezed, pass the top, the scrap, chips, or the like are released from the adsorption force due to the magnetic forces of the magnets 4, 4, ..., scraped by the plate-like scraper 7 abutting on the outer circumferential surface of the rotating drum 3, and recovered.

On the other hand, after the coolant liquid is stored in the liquid reservoir portion 10 at first, the coolant liquid passes through the magnetic field channel 16 which is formed by the rotating drum 3 and a casing bottom plate 9 disposed along the rotating drum 3. The coolant liquid passes through the magnetic field channel 16, and thus, the scrap, chips, or the like which are mixed in the liquid are separated and recovered.

Moreover, an opening 8 is provided at a position of the magnetic field channel 16 opposite to the outer cylinder of the rotating drum 3. The opening 8 has a parallel slit shape which is perpendicular to the rotation direction of the rotating shaft 31 of the rotating drum 3. The opening 8 is manufactured by processing stainless steel (SUS 304) having a flat plate shape at first by a laser or a turret punch so as to form a constant opening width in a thickness direction, and thereafter, by bending the stainless steel in an arc shape.

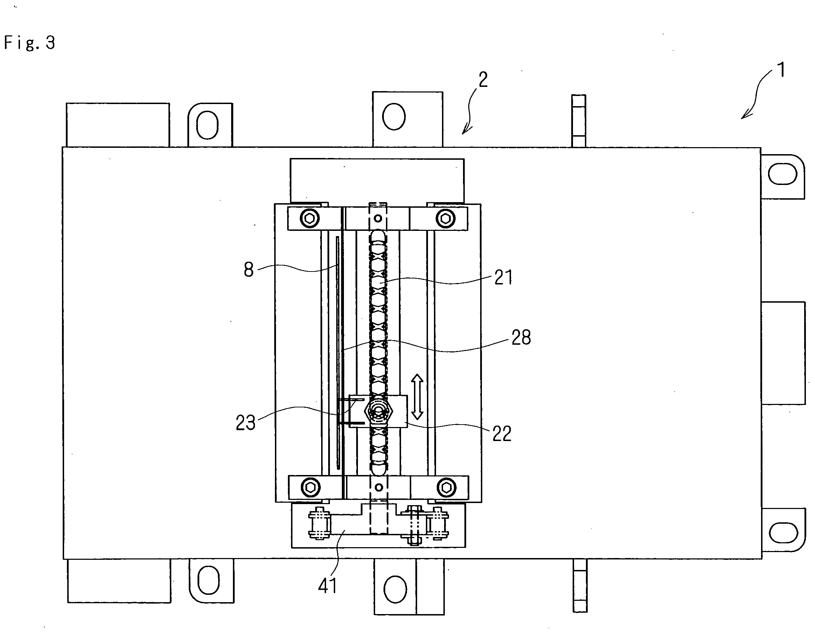

A device for suppressing silt clogging 2 which suppresses clogging of ground particles by cleaning the opening 8 is provided outside the opening 8. Fig. 3 is a plan view showing the configuration of the device for suppressing slit clogging 2 according to Embodiment 1 of the present invention. Fig. 3 is a view when the bottom surface of the rotating-drum type magnetic separator 1 is viewed from the bottom surface side.

As shown in Fig. 2, a cylindrical groove cam mechanism, which is configured by a cylindrical shaft 21 having a groove which can be rotated and a slit cleaning member 22 which engages with the groove, is provided below the opening 8 as a moving mechanism which moves the slit cleaning member 22. As shown in Fig. 3, the cylindrical shaft 21 is provided so as to be approximately parallel in the longitudinal direction of the slit-like opening 8 and is disposed at a position which is deviated in the rotation direction of the rotating drum 3 from immediately below the opening 8. Since the cylindrical shaft is deviated from immediately below the opening 8, the movement of the slit cleaning member 22 is not regulated by the ground particles which are discharged from the opening 8.

When the shaft 21 is rotated, the slit cleaning member 22 moves along the longitudinal direction of the opening 8 on the shaft 21. The slit cleaning member 22 moves, and thus, a slit cleaning pin 23 provided on the tip of the slit cleaning member 22 reciprocates along the longitudinal direction of the opening 8 in the slit-like opening 8, and the ground particles which are accumulated in the vicinity of the opening 8 can be effectively removed.

Moreover, it is preferable that a plate-like member 28 is mounted so as to be approximately parallel in the longitudinal direction of the opening 8 between the shaft 21 and the slit-like opening 8. The reason is because the possibility that the ground particles discharged from the opening 8 may be guided to the cylindrical groove cam mechanism is decreased, and thus, the ground particles can be stably separated and recovered.

In Embodiment 1, in the cylindrical groove cam mechanism, the groove included in the cylindrical shaft 21 is formed in a cross screw shape, and a protrusion of the slit cleaning member 22 is connected so as to be engaged with the groove. When the shaft 21 is rotated, the slit cleaning member 22 moves along the longitudinal direction of the opening 8 in the slit-like opening 8 according to the rotation of the shaft 21. The slit cleaning member 22 moves along the longitudinal direction of the opening 8 according to the rotation of the shaft 21, and thus, the clogging of the ground particles in the opening 8 can be suppressed, and the ground particles can be separated and recovered in free maintenance.

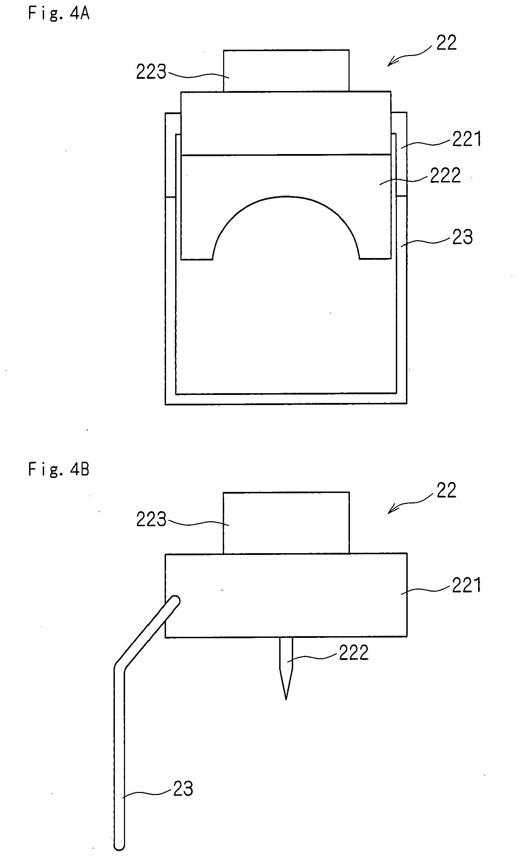

Fig. 4 is a front view and a side view showing a configuration of the slit cleaning member 22 of the device for suppressing slit clogging 2 according to Embodiment 1 of the present invention. Fig. 4(a) is a front view showing the configuration of the slit cleaning member 22 of the device for suppressing slit clogging 2 according to Embodiment 1 of the present invention, and Fig. 4(b) is a side view showing the configuration of the slit cleaning member 22 of the device for suppressing slit clogging 2 according to Embodiment 1 of the present invention.

The slit cleaning member 22 is connected to a main body portion 221 which reciprocates along the longitudinal direction of the opening 8 on the cylindrical shaft 21 so as to reciprocate on the shaft 21 via a protrusion 222 which engages with the groove of the shaft 21 and a fixed portion 223. The slit cleaning pin 23 has a shape which is curved toward the outside of the main body portion 221 so as to be inserted into the opening 8 at a position separate from the protrusion 222 which engages with the groove of the shaft 21. Thus, the possibility that the reciprocation of the slit cleaning pin 23 in the opening 8 may be impeded by the ground particles which are discharged from the opening 8 and drop can be decreased. Of course, the shape of the slit cleaning pin 23 is not limited to the shape shown in Fig. 4, and may have any shape if the slit cleaning pin 23 can be inserted into the slit-like opening 8 without disposing the shaft 21 at the position which is deviated from immediately below the opening 8.

Referring back to Fig. 2, a power source which rotates the shaft 21 is made to be common to a power source which rotates the rotating drum 3. That is, a rotation transmission mechanism which transmits the rotation of the rotating shaft 31 to the shaft 21 is provided on at least one end of the rotating shaft 31 of the rotating drum 3. Thereby, it is not necessary to separately provide the power source so as to clean the slit-like opening 8 and suppress clogging of the ground particles, the shaft 21 is rotated by the power source which rotates the rotating drum 3, and thus, clogging of the ground particles in the opening 8 can be suppressed by moving the slit cleaning member 22.

Specifically, in the rotation transmission mechanism, a chain unit 41 is mounted on at least one end of the shaft 21, and continuous protrusions 42 which can engage with the chain unit 41 are provided on at least one end of the rotating shaft 31 of the rotating drum 3. Thereby, it is not necessary to separately provide the power source to clean the slit-like opening 8 and suppress clogging of the ground particles, the shaft 21 is rotated by the power source which rotates the rotating drum 3 via the simple mechanism, and thus, clogging of the ground particles in the opening 8 can be suppressed by moving the slit cleaning member 22.

That is, as shown in Fig. 2, when a motor 43, which is a power source rotating the rotating drum 3, is rotated, the rotating shaft 31 of the rotating drum 3 is rotated in a counterclockwise direction, and the sludge, which contains scrap, chips, or the like adsorbed to the plurality of magnets 4, 4, ..., is transported up to the top of the rotating drum 3. When the sludge passes the top of the rotating drum 3, the sludge is released from the adsorption forces due to the magnetic forces of the plurality of magnets 4, 4, ..., scraped away by the plate-like scraper 7 abutting on the outer circumferential surface of the rotating drum 3, and recovered.

The rotating shaft 31 of the rotating drum 3 is rotated in a counterclockwise direction, and thus, the chain unit 41, which engages with the plurality of continuous protrusions 42, 42, ..., is rotated in a clockwise direction. The chain unit 41 is rotated in a clockwise direction, and thus, the shaft 21 is also rotated in a clockwise direction. According to the rotation of the shaft 21, in which the protrusion 222 of the slit cleaning member 22 is connected by engaging with the groove formed in a cross screw shape, the slit cleaning member 22 linearly moves along any direction of the longitudinal direction of the opening 8.

When the protrusion 222 of the slit cleaning member 22 reaches one end of the opening 8, since the groove is formed in a cross screw shape, without a change in the rotation direction of the shaft 21, the protrusion 222 of the slit cleaning member 22 linearly moves from the one end of the opening 8 in which the protrusion has reached toward the opposite direction. Therefore, since the slit cleaning member 22 moves along the longitudinal direction of the slit-like opening 8 while the rotating drum 3 is continuously rotated, clogging of the ground particles in the opening 8 can be suppressed, and the ground particles can be separated and recovered in free maintenance.

As described above, according to Embodiment 1, the slit cleaning member 22, which is connected to the cylindrical groove cam mechanism which is a moving mechanism, moves along the longitudinal direction of the slit-like opening 8, and thus, the slit cleaning pin 23 of the slit cleaning member 22 can always move along the longitudinal direction of the opening 8 in the opening 8, and it is possible to suppress the opening 8 from being clogged due to the ground particles. Moreover, since the cylindrical groove cam mechanism can be operated by the power source which rotates the rotating drum 3 via a simple mechanism such as the chain unit 41, it is not necessary to separately provide the power source so as to clean the slit-like opening 8 and suppress the clogging of the ground particles.

### (Embodiment 2)

A configuration of the rotating-drum type magnetic separator 1 itself which uses a device for suppressing slit clogging according to Embodiment 2 of the present invention is similar to the configuration in the related art (refer to Fig. 1), the same reference numerals are attached, and the detailed descriptions are omitted. Embodiment 2 is different from Embodiment 1 in that clogging of the ground particles are suppressed by cleaning the slit-like opening 8 manually.

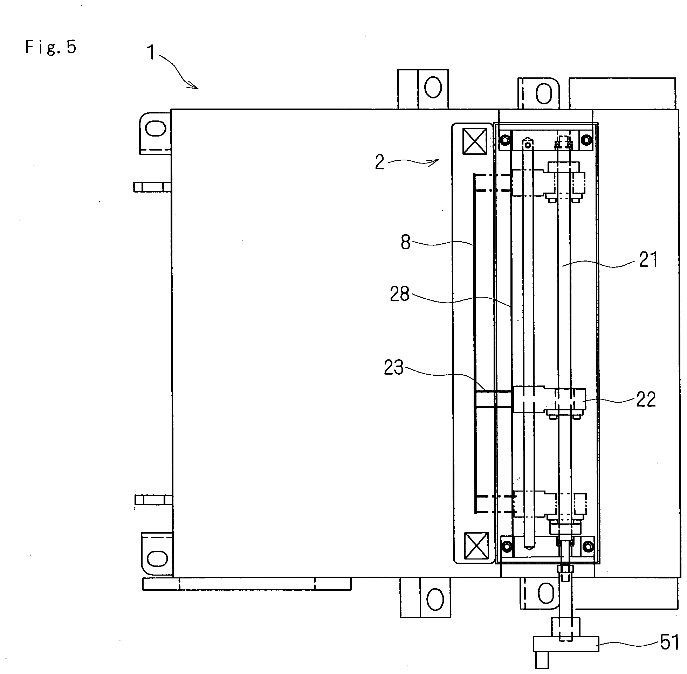

The device for suppressing silt clogging 2 which suppresses clogging of ground particles in the opening 8 by cleaning the opening 8 is provided outside the opening 8. Fig. 5 is a plan view showing a configuration of the device for suppressing slit clogging 2 according to Embodiment 2 of the present invention. Fig. 5 is a view when the bottom surface of the rotating-drum type magnetic separator 1 is viewed from the bottom surface side.

As shown in Fig. 2, a cylindrical groove cam mechanism, which is configured by the cylindrical shaft 21 having a groove which can be rotated and the slit cleaning member 22 which engages with the groove, is provided below the opening 8. As shown in Fig. 5, the cylindrical shaft 21 is provided so as to be approximately parallel in the longitudinal direction of the slit-like opening 8 and is disposed at a position which is deviated in the rotation direction of the rotating drum 3 from immediately below the opening 8. Since the cylindrical shaft is deviated from immediately below the opening 8, the movement of the slit cleaning member 22 is not regulated by the ground particles which are discharged from the opening 8.

A groove having an internal screw shape is formed on the cylindrical shaft 21, and the protrusion 222 having an external screw shape is formed on the slit cleaning member 22. The groove of the shaft 21 and the protrusion 222 of the slit cleaning member 22 is connected so as to be engaged with each other, and the slit cleaning member 22 moves along the longitudinal direction of the slit-like opening 8 according to the rotation of the shaft 21.

An operating handle 51 which can rotate the shaft 21 manually is provided on one end of the shaft 21. For example, when the operating handle 51 is rotated in a clockwise direction, the shaft 21 is also rotated in a clockwise direction. According to the rotation of the shaft 21, in which the protrusion 222 of the slit cleaning member 22 is connected by engaging with the groove formed in a cross screw shape, the slit cleaning member 22 linearly moves in a direction which approaches the operation handle 51 along the longitudinal direction of the opening 8.

Conversely, when the operating handle 51 is rotated in a counterclockwise direction, the shaft 21 is also rotated in a counterclockwise direction. According to the rotation of the shaft 21, the slit cleaning member 22 linearly moves in a direction separate from the operating handle 51 along the longitudinal direction of the opening 8 via the protrusion 222 which engages with the groove of the shaft 21.

Accordingly, by rotating the operating handle 51 appropriately, since the slit cleaning pin 23 provided on the tip of the slit cleaning member 22 reciprocates along the longitudinal direction of the opening 8 in the slit-like opening 8, the ground particles which are accumulated in the vicinity of the opening 8 can be effectively removed.

In addition, it is preferable that the plate-like member 28 is mounted so as to be approximately parallel in the longitudinal direction of the opening 8 between the shaft 21 and the slit-like opening 8. The reason is because the possibility that the ground particles discharged from the opening 8 may be guided to the cylindrical groove cam mechanism is decreased, and thus, the ground particles can be stably separated and recovered.

According to Embodiment 2 as described above, in the cylindrical groove cam mechanism, the groove which is formed in an internal screw shape and the protrusion 222 of the slit cleaning member 22 which is formed in an external screw shape is connected so as to be engaged with each other. The slit cleaning member 22 moves along the longitudinal direction of the slit-like opening 8 according to the rotation of the shaft 21, and thus, the clogging of the ground particles in the slit-like opening 8 can be suppressed, and the ground particles can be separated and recovered in free maintenance. Moreover, since the cylindrical groove cam mechanism can be operated manually, it is not necessary to provide a power source separately from the power source which rotates the rotating drum 3 so as to clean the slit-like opening 8 and suppress the clogging of the ground particles.

### (Embodiment 3)

A configuration of the rotating-drum type magnetic separator 1 itself which uses a device for suppressing slit clogging according to Embodiment 3 of the present invention is similar to the configuration in the related art (refer to Fig. 1), the same reference numerals are attached, and the detailed descriptions are omitted. Embodiment 3 is different from Embodiments 1 and 2 in that the moving mechanism which moves the slit cleaning member 22 is a circular member which is wound around two columnar members.

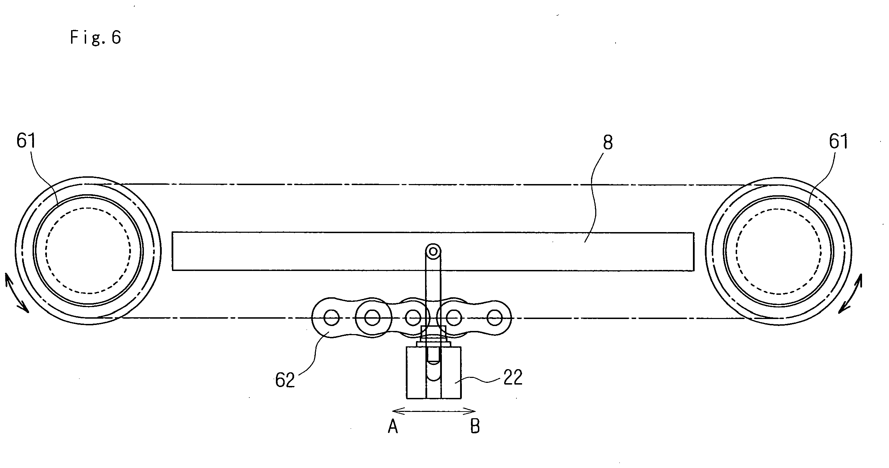

A device for suppressing silt clogging 2 which suppresses clogging of ground particles in the opening 8 by cleaning the opening 8 is provided outside the opening 8. Fig. 6 is a plan view showing a configuration of the device for suppressing slit clogging 2 according to Embodiment 3 of the present invention. Fig. 6 is a view when the bottom surface of the rotating-drum type magnetic separator 1 is viewed from the bottom surface side.

As shown in Fig. 6, a moving mechanism, which is configured by two columnar members 61 and 61 which can be rotated and an annular member 62 which is wound around the columnar members 61 and 61, is provided below the opening 8. For example, two sprockets are used as the columnar members 61 and 61, a chain belt is used as the annular member 62, and the slit cleaning member 22 is fixed to a portion of the chain belt. Of course, the invention is not limited to the combination of the sprocket and the chain belt, and any configuration such as a combination of a roller and a belt may be adopted if the annular member 62 moves according to the rotation of two columnar members 61 and 61.

When the columnar members 61 and 61 are rotated at the same rotation angular velocity in the same direction, the annular member 62 moves in any direction of arrow directions of Fig. 6. For example, when the columnar members 61 and 61 are rotated in a clockwise direction, the annular member 62 moves in an arrow A direction, and when the columnar members 61 and 61 are rotated in a counterclockwise direction, the annular member 62 moves in an arrow B direction.

According to the movement of the annular member 62, the slit cleaning member 22 which is fixed to the annular member 62 also moves along the longitudinal direction of the slit-like opening 8. Since a portion of the slit cleaning member 22 is inserted into the opening 8, the ground particles which are accumulated in the vicinity of the opening 8 can be effectively removed.

As described above, according to Embodiment 3, two columnar members 61 and 61 which can be rotated and the annular member 62 which is wound around the columnar members 61 and 61 are provided below the opening 8, and the slit cleaning member 22 is fixed to the annular member 62. Two columnar members 61 and 61 are rotated and the annular member 62, which is wound around the columnar members, moves, and thus, a portion of the fixed slit cleaning member 22 is inserted into the slit-like opening 8 and moves along the longitudinal direction of the opening 8. Since a portion of the inserted slit cleaning member 22 moves, the ground particles which are accumulated in the vicinity of the opening 8 can be removed, and clogging of the opening 8 due to the ground particles can be suppressed.

Moreover, the present invention is not limited the above-described embodiments, and various modifications, improvements, or the like are possible within the scope of the present invention as defined by the appended claims. For example, in Embodiment 1, as the rotation transmission mechanism, the configuration is described in which the chain unit 41 is mounted on at least one end of the shaft 21 and the continuous protrusions 42 which can engage with the chain unit 41 are provided on at least one end of the rotating shaft 31 of the rotating drum 3. However, the chain units 41 may be provided on both ends of the shaft 21, and in addition to the chain unit, if the rotation transmission mechanism can transmit a rotation such as a gear mechanism or a belt mechanism, the rotation transmission mechanism is not particularly limited.

## Claims

1. A rotating-drum type magnetic separator (1) which includes a rotating drum (3) on which a plurality of magnets (4) are disposed and which separates unnecessary matters in treated coolant liquid,
wherein a slit-like opening (8) is provided below the rotating drum (3), said magnetic separator (1) being **characterized by** comprising a device for suppressing slit clogging (2),
wherein the device for suppressing slit clogging (2) comprises a slit cleaning member (22), a portion (23) of which being inserted into the opening (8), said slit cleaning member (22) being arranged so as to be movable along a longitudinal direction of the opening (8).

2. The rotating-drum type magnetic separator (1) according to claim 1,
wherein a moving mechanism (21, 61, 62) which is arranged to move the slit cleaning member (22) is disposed so as to be approximately parallel to the opening (8) and at a position separate from immediately below the opening (8).

3. The rotating-drum type magnetic separator (1) according to claim 2,
wherein a plate-like member (28) is mounted so as to be approximately parallel to the opening (8) between the moving mechanism (21, 61, 62) and the opening (8).

4. The rotating-drum type magnetic separator (1) according to any one of claims 1 to 3,
wherein a cylindrical groove cam mechanism, which is configured by a cylindrical shaft (21) having a groove which can be rotated and the slit cleaning member (22) which engages with the groove, is provided below the opening (8) as the moving mechanism.

5. The rotating-drum type magnetic separator (1) according to claim 4,
wherein in the cylindrical groove cam mechanism, the groove which is formed in an internal screw shape and a protrusion (222) of the slit cleaning member (22) which is formed in an external screw shape are connected so as to be engaged with each other, so that the slit cleaning member (22) moves along the longitudinal direction of the opening (8) according to a rotation of the shaft (21).

6. The rotating-drum type magnetic separator (1) according to claim 4 or 5,
wherein in the cylindrical groove cam mechanism, the groove is formed in a cross screw shape and the protrusion (222) of the slit cleaning member (22) is connected so as to be engaged with the groove, so that the slit cleaning member (22) moves along the longitudinal direction of the opening (8) according to the rotation of the shaft (21).

7. The rotating-drum type magnetic separator (1) according to claim 6,
wherein a rotation transmission mechanism (41, 42), which transmits a rotation of a rotating shaft (31) of the rotating drum (3) to the cylindrical shaft (21) of the cylindrical groove cam mechanism, is provided on at least one end of the rotating shaft (31) of the rotating drum (3), so that the cylindrical groove cam mechanism is operated by the rotation of the rotating drum (3).

8. The rotating-drum type magnetic separator (1) according to claim 7,
wherein in the rotation transmission mechanism, a chain unit (41) is mounted on at least one end of the cylindrical shaft (21) of the cylindrical groove cam mechanism, and continuous protrusions (42) which can engage with the chain unit (41) are provided on at least one end of the rotating shaft (31) of the rotating drum (3).

9. The rotating-drum type magnetic separator (1) according to claim 1,
wherein two columnar members (61) which can rotate and an annular member (62) which is wound around the columnar members (61) are provided below the opening (8) as a moving mechanism, and
wherein the slit cleaning member (22) is fixed to a portion of the annular member (62).

## Patentansprüche

1. Magnetseparator (1) mit Drehtrommel, der eine Drehtrommel (3) aufweist, an welcher eine Vielzahl von Magneten (4) angeordnet sind, und welche unnötige bzw. unerwünschte Stoffe in behandelter Kühlflüssigkeit abtrennt, wobei eine schlitzartige Öffnung (8) unter der Drehtrommel (3) vorgesehen ist, wobei der Magnetseparator (1) **dadurch gekennzeichnet ist, dass** er eine Vorrichtung (2) zum Unterbinden des Zusetzens bzw. einer Verstopfung aufweist,
wobei die Vorrichtung (2) zum Unterbinden einer Verstopfung ein Schlitzreinigungsglied (22) aufweist, weiter einen Teil (23), der in die Öffnung (8) eingeführt ist, wobei das Schlitzreinigungsglied (22) so angeordnet ist, dass es entlang einer Längsrichtung der Öffnung (8) bewegbar ist.

2. Magnetseparator (1) des Drehtrommeltyps nach Anspruch 1,
wobei ein Bewegungsmechanismus (21, 61, 62), der so angeordnet ist, dass er das Schlitzreinigungsglied (22) bewegt, so angeordnet ist, dass er ungefähr parallel zur Öffnung (8) ist, und dass er an einer Position getrennt von direkt unter der Öffnung (8) ist.

3. Magnetseparator (1) des Drehtrommeltyps nach Anspruch 2,
wobei ein plattenartiges Glied (28) so befestigt ist, dass es ungefähr parallel zu der Öffnung (8) zwischen dem Bewegungsmechanismus (21, 61, 62) und der Öffnung (8) ist.

4. Magnetseparator (1) des Drehtrommeltyps nach einem der Ansprüche 1 bis 3,
wobei ein zylindrischer Nutnockenmechanismus durch eine zylindrische Welle (21) mit einer Nut konfiguriert ist, welche gedreht werden kann, und wobei das Schlitzreinigungsglied (22), welches mit der Nut in Eingriff ist, unter der Öffnung (8) als der Bewegungsmechanismus vorgesehen ist.

5. Magnetseparator (1) des Drehtrommeltyps nach Anspruch 4,
wobei in dem zylindrischen Nutnockenmechanismus die Nut, welche in einer Innengewindeform geformt ist, und ein Vorsprung (222) des Schlitzreinigungsgliedes (22), welcher in Form eines Außengewindes geformt ist, so verbunden sind, dass sie miteinander in Eingriff sind, dass das Schlitzreinigungsglied (22) sich entlang der Längsrichtung der Öffnung (8) gemäß einer Drehung der Welle (21) bewegt.

6. Magnetseparator (1) des Drehtrommeltyps nach Anspruch 4 oder 5,
wobei in dem zylindrischen Nutnockenmechanismus die Nut in einer Querschraubenform geformt ist und der Vorsprung (222) des Schlitzreinigungsgliedes (22) so angeschlossen ist, dass er mit der Nut in Eingriff ist, so dass das Schlitzreinigungsglied (22) sich entlang der Längsrichtung der Öffnung (8) gemäß der Drehung der Welle (21) bewegt.

7. Magnetseparator (1) des Drehtrommeltyps nach Anspruch 6,
wobei ein Drehübertragungsmechanismus (41, 42), der eine Drehung einer sich drehenden Welle (31) der Drehtrommel (3) auf die zylindrische Welle (21) des zylindrischen Nutnockenmechanismus überträgt, an mindestens einem Ende der sich drehenden Welle (31) der Drehtrommel (3) vorgesehen ist, so dass der zylindrische Nutnockenmechanismus durch die Drehung der Drehtrommel (3) betrieben wird.

8. Magnetseparator (1) des Drehtrommeltyps nach Anspruch 7,
wobei in dem Drehübertragungsmechanismus eine Ketteneinheit (41) an mindestens einem Ende der zylindrischen Welle (21) des zylindrischen Nutnockenmechanismus befestigt ist, und wobei kontinuierliche Vorsprünge (42), die mit der Ketteneinheit (41) in Eingriff kommen können, an mindestens einem Ende der sich drehenden Welle (31) der Drehtrommel (3) vorgesehen sind.

9. Magnetseparator (1) des Drehtrommeltyps nach Anspruch 1,
wobei zwei säulenförmige Glieder (61), die sich drehen können, und ein ringförmiges Glied (62), welches um die säulenförmigen Glieder (61) gewickelt ist, unter der Öffnung (8) als ein Bewegungsmechanismus vorgesehen sind, und wobei das Schlitzreinigungsglied (22) an einem Teil des ringförmigen Gliedes (62) befestigt ist.

## Revendications

1. Séparateur magnétique de type à tambour rotatif (1) qui comporte un tambour rotatif (3) sur lequel une pluralité d'aimants (4) sont disposés et qui sépare des matières inutiles dans un liquide de refroidissement traité,
dans lequel une ouverture en forme de fente (8) est prévue sous le tambour rotatif (3), ledit séparateur magnétique (1) étant **caractérisé en ce qu'**il comprend un dispositif destiné à supprimer un colmatage de fente (2),
dans lequel le dispositif destiné à supprimer un colmatage de fente (2) comprend un élément de nettoyage de fente (22), dont une partie (23) est insérée dans l'ouverture (8), ledit élément de nettoyage de fente (22) étant agencé de sorte à être mobile le long d'une direction longitudinale de l'ouverture (8).

2. Séparateur magnétique de type à tambour rotatif (1) selon la revendication 1,
dans lequel un mécanisme de déplacement (21, 61, 62) qui est agencé pour déplacer l'élément de nettoyage de fente (22) est disposé de sorte à être approximativement parallèle à l'ouverture (8) et en une position distincte d'immédiatement sous l'ouverture (8) .

3. Séparateur magnétique de type à tambour rotatif (1) selon la revendication 2,
dans lequel un élément en forme de plaque (28) est monté de sorte à être approximativement parallèle à l'ouverture (8) entre le mécanisme de déplacement (21, 61, 62) et l'ouverture (8).

4. Séparateur magnétique de type à tambour rotatif (1) selon l'une quelconque des revendications 1 à 3,
dans lequel un mécanisme de came à rainure cylindrique, qui est configuré par un arbre cylindrique (21) ayant une rainure qui peut être tournée et l'élément de nettoyage de fente (22) qui s'engage avec la rainure, est prévu sous l'ouverture (8) en tant que le mécanisme de déplacement.

5. Séparateur magnétique de type à tambour rotatif (1) selon la revendication 4,
dans lequel, dans le mécanisme de came à rainure cylindrique, la rainure qui est formée en forme de vis interne et une saillie (222) de l'élément de nettoyage de fente (22) qui est formée en forme de vis externe sont connectées de sorte à être engagées l'une avec l'autre, de sorte que l'élément de nettoyage de fente (22) se déplace le long de la direction longitudinale de l'ouverture (8) en fonction d'une rotation de l'arbre (21).

6. Séparateur magnétique de type à tambour rotatif (1) selon la revendication 4 ou 5,
dans lequel, dans le mécanisme de came à rainure cylindrique, la rainure est formée en forme de vis cruciforme et la saillie (222) de l'élément de nettoyage de la fente (22) est connectée de sorte à être engagée avec la rainure, de sorte que l'élément de nettoyage de fente (22) se déplace le long de la direction longitudinale de l'ouverture (8) en fonction de la rotation de l'arbre (21).

7. Séparateur magnétique de type à tambour rotatif (1) selon la revendication 6,
dans lequel un mécanisme de transmission de rotation (41, 42), qui transmet une rotation d'un arbre rotatif (31) du tambour rotatif (3) à l'arbre cylindrique (21) du mécanisme de came à rainure cylindrique, est prévu sur au moins une extrémité de l'arbre rotatif (31) du tambour rotatif (3), de sorte que le mécanisme de came à rainure cylindrique est actionné par la rotation du tambour rotatif (3).

8. Séparateur magnétique de type à tambour rotatif (1) selon la revendication 7,
dans lequel, dans le mécanisme de transmission de rotation, une unité de chaîne (41) est montée sur au moins une extrémité de l'arbre cylindrique (21) du mécanisme de came à rainure cylindrique, et des saillies continues (42) qui peuvent s'engager avec l'unité de chaîne (41) sont prévues sur au moins une extrémité de l'arbre rotatif (31) du tambour rotatif (3).

9. Séparateur magnétique de type à tambour rotatif (1) selon la revendication 1,
dans lequel deux éléments en colonne (61) qui peuvent tourner et un élément annulaire (62) qui est enroulé autour des éléments en colonne (61) sont prévus sous l'ouverture (8) en tant qu'un mécanisme de déplacement, et
dans lequel l'élément de nettoyage de fente (22) est fixé à une partie de l'élément annulaire (62).
